(19) **Europäisches Patentamt / European Patent Office / Office européen des brevets**

(11) **EP 1 624 974 B1**

(12) **EUROPÄISCHE PATENTSCHRIFT**

(45) Veröffentlichungstag und Bekanntmachung des Hinweises auf die Patenterteilung:
**13.06.2007 Patentblatt 2007/24**

(21) Anmeldenummer: **04730980.2**

(22) Anmeldetag: **04.05.2004**

(51) Int Cl.:
**B05D 5/06** *(2006.01)*    **C09D 5/36** *(2006.01)*
**C09D 7/14** *(2006.01)*    **C09D 151/00** *(2006.01)*
**C09D 5/02** *(2006.01)*    **C08F 2/22** *(2006.01)*
**C08F 265/00** *(2006.01)*

(86) Internationale Anmeldenummer:
**PCT/EP2004/004707**

(87) Internationale Veröffentlichungsnummer:
**WO 2004/098793 (18.11.2004 Gazette 2004/47)**

(54) **POLYMERDISPERSION MIT FARBEFFEKT**

POLYMER DISPERSION WITH A COLOUR EFFECT

DISPERSION POLYMERE A EFFET CHROMATIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **09.05.2003 DE 10321083**

(43) Veröffentlichungstag der Anmeldung:
**15.02.2006 Patentblatt 2006/07**

(73) Patentinhaber: **BASF Aktiengesellschaft**
**67056 Ludwigshafen (DE)**

(72) Erfinder:
• **HE, Xu**
  **67063 Ludwigshafen (DE)**

• **LEYRER, Reinhold, J.**
  **67125 Dannstadt (DE)**
• **SCHÖPKE, Holger**
  **69151 Neckargemünd (DE)**

(56) Entgegenhaltungen:
**EP-A- 0 441 559      EP-A- 0 451 940**
**EP-A- 1 197 503      US-A- 5 157 084**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Verbesserung der Farbbrillanz und der Stabilität eines farbigen Polymersystems, welches aus einer Matrix und diskreten Polymerteilchen, welche gemäß einer definierten Raumgitterstruktur in der Matrix verteilt sind, besteht und durch Verfilmung eines Emulsionspolymerisats mit Kern/Schale Aufbau erhalten wird, dadurch gekennzeichnet, dass,

- das Emulsionspolymerisat erhältlich ist durch
- Polymerisation von Monomeren in mindestens einer ersten Stufe (Monomere des Kerns),
- anschließende Polymerisation von Monomeren in mindestens einer weiteren, zweiten Stufe (Übergangsstufe) und
- abschließende Polymerisation von Monomeren in einer dritten Stufe (Monomere der Schale),

wobei, bezogen auf die prozentuale Zusammensetzung der Monomerengemische der drei Stufen, maximal 30 Gew.-% der Monomeren der ersten Stufe mit denen der dritten Stufe übereinstimmen und die Monomeren der zweiten Stufe jeweils zu mindestens 5 Gew.-% mit denen der ersten und denen der dritten Stufe übereinstimmen, wobei es sich bei maximal 60 Gew.-% der Monomeren der 2. Stufe um Monomere handelt, die weder in der 1. noch in der 3. Stufe vorhanden sind.

Weiterhin betrifft die Erfindung farbige Polymersysteme, die nach diesen Verfahren erhältlich sind und die Verwendung der farbigen Polymersysteme zur Beschichtung z.B. von Kunststoffen, Papier oder in optischen Anzeigen.

Aus DE-19717879, DE-19820302 und DE-19834194 sind farbige Polymersysteme bekannt, bei denen diskrete Polymerteilchen in einen Matrix dispergiert sind.

In DE 10229732 (PF 53679) ist die Verwendung derartiger Polymerschichten in optischen Anzeigeelementen beschrieben.

Aufgabe der vorliegenden Erfindung war die Verbesserung der Farbbrillanz und der Stabilität der farbigen Polymersysteme. Demgemäss wurde das eingangs beschriebene Verfahren gefunden.

Die farbigen Polymersysteme bestehen im wesentlichen aus einer Matrix und diskreten Polymerteilchen, welche gemäß einer definierten Raumgitterstruktur in der Matrix verteilt sind.

Zu den Polymerteilchen

Zur Ausbildung einer definierten Raumgitterstruktur sollen die diskreten Polymerteilchen möglichst gleich groß sein. Ein Maß für die Einheitlichkeit der Polymerteilchen ist der sogenannte Polydispersitätsindex, berechnet nach der Formel

$$P.I. = (D_{90} - D_{10})/D_{50}$$

worin $D_{90}$, $D_{10}$ und $D_{50}$ Teilchendurchmesser bezeichnen, für die gilt:

$D_{90}$:    90 Gew.-% der Gesamtmasse aller Teilchen hat einen Teilchendurchmesser kleiner oder gleich $D_{90}$

$D_{50}$:    50 Gew.-% der Gesamtmasse aller Teilchen hat einen Teilchendurchmesser kleiner oder gleich $D_{50}$

$D_{10}$:    10 Gew.-% der Gesamtmasse aller Teilchen hat einen Teilchendurchmesser kleiner oder gleich $D_{10}$

Weitere Erläuterungen zum Polydispersitätsindex finden sich z.B. in DE-A 19717879 (insbesondere Zeichnungen Seite 1).

Die Teilchengrößenverteilung kann in an sich bekannter Weise, z.B. mit einer analytischen Ultrazentrifuge (W. Mächtle, Makromolekulare Chemie 185 (1984) Seite 1025-1039) bestimmt werden und daraus der $D_{10}$, $D_{50}$ und $D_{90}$-Wert entnommen und der Polydispersitätsindex bestimmt werden (nach dieser Methode sind die Werte der Beispiele bestimmt).

Alternativ kann die Teilchengröße und Teilchengrößenverteilung auch durch Messung der Lichtstreuung mit kommerziellen Geräten (z.B. Autosizer 2C der Firma Malvern, England) bestimmt werden.

Die Polymerteilchen haben bevorzugt einen $D_{50}$-Wert im Bereich um 0,05 bis 5 $\mu$m. Es kann sich bei den Polymerteilchen um eine Teilchensorte oder mehrere Teilchensorten mit unterschiedlichem $D_{50}$-Wert handeln, wobei jede Teilchensorte einen Polydispersitätsindex bevorzugt kleiner 0,6, besonders bevorzugt kleiner 0,4 und ganz besonders bevorzugt kleiner 0,3 und insbesondere kleiner 0,15 hat.

Insbesondere bestehen die Polymerteilchen nun aus einer einzigen Teilchensorte. Der $D_{50}$-Wert liegt dann vorzugsweise zwischen 0,05 und 20 $\mu$m, besonders bevorzugt liegt er zwischen 100 und 400 Nanometer.

Nach dem erfindungsgemäßen Verfahren wird das farbige Polymersystem durch Verfilmung eines Emulsionspolymerisats mit Kern/Schale Aufbau erhalten.

Die Schale des Emulsionspolymerisats ist verfilmbar und bildet die Matrix aus, während die Kerne des Emulsionspolymerists als diskrete Polymerteilchen in der Matrix verteilt sind.

Die vorstehenden Ausführungen über die Teilchengröße und Teilchengrößenverteilung der diskreten Polymerteilchen gelten auch für das Emulsionspolymerisat selbst.

Die Verwendung von Emulsionspolymerisaten mit Kern/Schale Aufbau zur Herstellung von farbigen Polymersystemen ist bereits im Stand der Technik beschrieben (siehe DE-A- 19820302, DE-A- 19834194).

Demgegenüber ist bei dem erfindungsgemäßen Verfahren neu, dass zwischen dem Kern und der Schale eine Übergangsstufe ausgebildet wird.

Das erfindungsgemäß verwendete Emulsionspolymerisat wird demgemäss durch eine mehrstufige Polymerisation erhalten,

wobei

zunächst in mindestens einer 1. Stufe die Monomeren polymerisiert werden, die den Kern ausbilden,

danach die Monomeren in mindestens einer 2. Stufe (Übergangsstufe) polymerisiert werden und schließlich in einer 3. Stufe die Monomeren polymerisiert werden, die die verfilmbare Schale ausbilden.

Naturgemäß unterscheidet sich die Monomerzusammensetzung des Kerns deutlich in der Schale. Der Kern ist vorzugsweise vernetzt, während die Schale unvernetzt ist. Vorzugsweise werden beim Kern Monomere mit hoher Glasübergangstemperatur ($T_g$) verwendet, während die Monomeren der Schale eine tiefere $T_g$ haben.

Bezogen jeweils auf die prozentuale Zusammensetzung der 1. und 3. Stufe sind maximal 30 Gew.-% des Monomeren der 1. mit denen der 3. Stufe identisch; vorzugsweise sind maximal 15 Gew.-% besonders bevorzugt maximal 5 Gew.-% und ganz besonders bevorzugt keine Monomeren der 1. und 3. Stufe identisch.

Beispiel:

Die 1. Stufe soll z.B. aus 80 Gew.-% Styrol, 10 Gew.-% Butylacrylat, 5 Gew.-% Butandioldiacrylat und 5 Gew.-% Acrylsäure bestehen; die 3. Stufe aus 90 Gew.-% Butylacrylat, 5 Gew.-% Styrol und 5 Gew.-% Acrylsäure.

Sowohl in der 1. wie in der 3. Stufe finden sich 5 Gew.-% Acrylsäure, 10 Gew.-% Butylacrylat und 5 Gew.-% Styrol. Insgesamt stimmen 20 Gew.-% der Monomeren überein.

Nach der Polymerisation der Monomeren der 1. Stufe und vor der Polymerisation der Monomeren der 3. Stufe werden die Monomeren der 2. Stufe (Übergangsstufe) polymerisiert.

Für das Monomerengemisch der 2. Stufe gilt folgendes:

Mindestens 5 Gew.-% der Monomeren der 2. Stufe stimmen mit denen der 1. Stufe und mindestens 5 Gew.-% der Monomeren der 2. Stufe stimmen mit denen der 3. Stufe überein.

Vorzugsweise stimmen jeweils mindestens 10 Gew.-%, besonders bevorzugt mindestens 20 Gew.-% und ganz besonders bevorzugt mindestens 30 Gew.-% insbesondere mindestens 40 Gew.-% der Monomeren der 2. Stufe mit denen der 1. bzw. der 3. Stufe überein.

Insgesamt handelt es sich bei maximal 60 Gew.%, vorzugsweise maximal 40 Gew.-%, besonders bevorzugt maximal 20 Gew.-%, ganz besonders bevorzugt maximal 5 Gew.-%, insbesondere 0 Gew.-% der Monomeren der 2. Stufe um Monomere, die weder in der 1. Stufe noch in der 2. Stufe vorhanden sind.

Beispiel:

| 1. Stufe | 2. Stufe | 3. Stufe |
|---|---|---|
| 80 Gew.-% Styrol | 40 Gew.-% Styrol | 90 Gew.-% Butylacrylat |
| 10 Gew.-% Butylacrylat | 55 Gew.-% Butylacrylat | 5 Gew.-% Styrol |
| 5 Gew.-% Acrylsäure | 4 Gew.-% Acrylsäure | 5 Gew.-% Acrylsäure |
| 5 Gew.-% Butandioldiacrylat | 1 Gew.-% Methacrylsäure | |

im vorstehenden Beispiel stimmen 54 Gew.-% der Monomere der 2. Stufe mit denen der 1. Stufe überein (und zwar 40 % Styrol, 10 % Butylacrylat und 4 % Acrylsäure der 2. Stufe).

Weiterhin stimmen 64 Gew.-% der Monomeren der 2. Stufe mit denen der 3. Stufe überein (55 Gew.-% Butylacrylat, 5 Gew.-% Styrol und 4 Gew.-% Acrylsäure).

Insgesamt sind 99 Gew.-% der Monomeren der 2. Stufe in der 1. oder 3. Stufe vorhanden, nur 1 Gew.-%

(Methacrylsäure) findet sich weder in der 1. noch 3. Stufe wieder.

Die Monomeren der 1. Stufe enthalten vorzugsweise vernetzende Monomere, insbesondere Monomere mit zwei polymerisierbaren Gruppen z.B. Divinylbenzol oder Alkandioldiacrylate.

Der Anteil der vernetzenden Monomere in dem Monomerengemisch der 1. Stufe beträgt vorzugsweise 0,01 bis 10 besonders bevorzugt 0,1 bis 5 Gew.-%, bezogen auf die Monomeren der 1. Stufe.

Das Monomerengemisch der 1. Stufe hat vorzugsweise eine nach der Fox-Gleichung berechnete Glasübergangstemperatur ($T_g$) von 15 bis 150, besonders bevorzugt von 25 bis 120°C.

Das Monomerengemisch der 3. Stufe ist verfilmbar und enthält vorzugsweise keine Vernetzer.

Die noch nach Fox berechnete $T_g$ des Monomerengemisches der 3. Stufe beträgt vorzugsweise -50 bis 110°C, besonders bevorzugt -40 bis 25°C. Die $T_g$ des Monomerengemisches der 3. Stufe ist vorzugsweise mindestens 10°C tiefer, besonders bevorzugt mindestens 20°C tiefer als die $T_g$ des Monomerengemisches der 1. Stufe.

Das Gewichtsverhältnis der Monomeren, welche den nicht verfilmenden Kern ausbilden, zu den Monomeren, die die verfilmende Schale ausbilden beträgt vorzugsweise 1:0,05 bis 1:20, besonders bevorzugt 1:0,2 bis 1:5. Hierbei werden die Monomeren der Übergangsstufe zum Kern gezählt, wenn sie nicht verfilmen, z.B. wegen eines Gehalts an vernetzende Monomeren, und zur Schale gezählt, wenn sie verfilmen.

Vorzugsweise ist die 2. Stufe vernetzt, sie bildet daher zusammen mit der 1. Stufe die diskreten Polymerteilchen in der Matrix.

Der Anteil der Monomeren der Übergangsstufe ist vorzugsweise 2 bis 40 Gew.-%, bezogen auf alle Monomeren des Emulsionspolymerisats.

Insgesamt gilt für den Anteil der Stufen an gesamten Polymerisat vorzugsweise folgendes:

1. Stufe (Kern) 10 - 90 Gew.-%, besonders bevorzugt 40 -60 Gew.-%.

2. Stufe (Übergangsstufe) 2 - 40 Gew.-%, besonders bevorzugt 5 -15 Gew.-%.

3. Stufe (Schale) 8 - 88 Gew.%, besonders bevorzugt 30 - 50 Gew.-%.

Insgesamt besteht das Emulsionspolymerisat vorzugsweise zu mindestens 40 Gew.-%, bevorzugt zu mindestens 60 Gew.-%, besonders bevorzugt zu mindestens 80 Gew.-% aus sogenannten Hauptmonomeren.

Die Hauptmonomeren sind ausgewählt aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, a- und p-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Butadien, Isopren und Chloropren genannt, mit einer Doppelbindung z.B. Ethylen oder Propylen.

Als Hauptmonomere bevorzugt sind die $C_1$- bis $C_{20}$-Alkylacrylate und -methacrylate, insbesondere $C_1$- bis $C_8$-Alkylacrylate und -methacrylate, Vinylaromaten, insbesondere Styrol, und deren Mischungen, insbesondere auch Mischungen der Alkyl(meth)acrylate und Vinylaromaten.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Die Herstellung des Emulsionspolymerisats erfolgt durch Emulsionspolymerisation. Bei der Emulsionspolymerisation werden ionische und/oder nicht-ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen Emulgatoren eingesetzt, deren Molekulargewicht im Unterschied zu den Schutzkolloiden üblicherweise unter 2000 g/mol liegen.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-ButylhydroperoxidlNatriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Monomeren des Monomerengemisches der 1. oder 2. Stufe werden vorzugsweise zu mindestens 90 Gew.-%, besonders bevorzugt zu mindestens, 95 Gew.-% und ganz besonders bevorzugt zu mindestens 99 Gew.-% auspolymerisiert, bevor mit der Zugabe der Monomeren der nächsten Stufe begonnen wird.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Eine einheitliche Teilchengrößenverteilung, d.h. ein geringer Polydispersitätsindex ist durch den Fachmann bekannte Maßnahmen erhältlich, z.B. durch Variation der Menge der grenzflächenaktiven Verbindung (Emulgator oder Schutzkolloide) und/oder entsprechende Rührergeschwindigkeiten.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Das Emulsionspolymerisat kann in üblicher Weise unter Entfernung des Wassers verfilmt werden, wodurch sich das farbige Polymersystem ausbildet.

Das Polymersystem verursacht einen optischen Effekt, das heißt eine zu beobachtende Reflexion durch Interferenz des an den Polymerteilchen gestreuten Lichts.

Die Wellenlänge der Reflexion kann dabei je nach Abstand der Polymerteilchen im gesamten elektromagnetischen Spektrum liegen. Vorzugsweise liegt die Wellenlänge im UV-Bereich, IR-Bereich und insbesondere im Bereich des sichtbaren Lichts.

Die Wellenlänge der zu beobachtenden Reflexion hängt dabei nach der bekannten Bragg-Gleichung von dem Netzebenenabstand, hier der Abstand zwischen den in einer Raumgitterstruktur in der Matrix angeordneten Polymerteilchen, ab.

Damit sich die gewünschte Raumgitterstruktur mit dem gewünschten Abstand zwischen den Polymerteilchen einstellt, ist insbesondere der Gewichtsanteil der Matrix entsprechend zu wählen. Bei den vorstehend beschriebenen Herstellmethoden sollten die organischen Verbindungen, z.B. polymere Verbindungen in entsprechender Menge eingesetzt werden.

Der Gewichtsanteil der Matrix, d.h. der Anteil der verfilmenden Schale wird insbesondere so bemessen, dass eine Raumgitterstruktur der Polymerteilchen entsteht, welche elektromagnetische Strahlung im gewünschten Bereich reflektiert.

Der Abstand zwischen den Polymerteilchen (jeweils bis zum Mittelpunkt der Teilchen) beträgt geeigneterweise 100 bis 400 nm, wenn ein Farbeffekt, d.h. eine Reflexion im Bereich des sichtbaren Lichts gewünscht ist.

Auf das farbige Polymersystem kann eine transparente Polymerschicht aufgebracht werden, um die Farbbrillanz und die Stabilität des farbigen Polymersystems zu verbessern.

Bei dem Polymer, welches die transparente Schicht ausbildet, kann es sich um ein beliebiges Polymer handeln. In Betracht kommen Polykondensate, Polyaddukte oder Polymere, die aus radikalisch polymerisierbaren Verbindungen (Monomere) erhältlich sind. Letztere sind bevorzugt.

Polymer der transparenten Schicht insgesamt zu mindestens 40 Gew. %, vorzugsweise zu mindestens 60 Gew.-% aus sogenannten Hauptmonomeren, ausgewählt aus $C_1$ bis $C_{20}$ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren aufgebaut.

Besonders bevorzugt handelt es sich bei dem Polymer der transparenten Polymerschicht um ein Emulsionspolymerisat.

Die Herstellung der Emulsionspolymerisate ist oben beschrieben.

Vorzugsweise liegt der gewichtsmittlere Teilchendurchmesser in der durch Emulsionspolymerisation erhaltenen wässrigen Polymerdispersion zwischen 10 und 200 nm, vorzugsweise zwischen 10 und 50 nm.

Zur Herstellung der transparenten Polymerschicht wird das Polymer, vorzugsweise in Form einer Dispersion oder Lösung, auf das farbige Polymersystem, welches im allgemeinen als farbige Beschichtung oder als Formkörper vorliegt, aufgebacht.

Im Falle einer Dispersion oder Lösung erfolgt eine Trocknung, gegebenenfalls auch bei erhöhter Temperatur.

Die erhaltene transparente Polymerschicht hat vorzugsweise eine Dicke von 0,2 bis 500 μm, vorzugsweise um 2 bis 100 μm. Durch die transparente Polymerschicht ist die Brillanz der Farbe mit Stabilität der Farbeffekte verbessert.

Eine weitere Verbesserung wird durch eine Erwärmung des farbigen Polymersystems und gegebenenfalls der aufgebrachten transparenten Polymerschicht auf Temperaturen oberhalb 50°C erreicht.

Dies sollte insbesondere höher sein als die Glasübergangstemperatur der Matrix. Bevorzugt liegt die Temperatur oberhalb 100°C. Sie übersteigt im allgemeinen nicht 200°C. Die Dauer der Erwärmung beträgt vorzugsweise mindestens 5 Sekunden und maximal 5 Minuten.

Die nach dem erfindungsgemäßen Verfahren erhaltenen oder erhältlichen farbigen Polymersysteme haben eine verbesserte Farbbrillianz und Stabilität.

Beispiele für die Anwendung des Patents

Alle Synthesen wurden in einem 2000-ml-Vierhalskolben durchgeführt, der mit einem Rückflusskühler, einem Stickstoffeintrittsrohr, Eintrittsrohren für die Beschickung mit der Monomeremulsion und der Initiatorlösung und einem Ankerrührer mit einer Drehzahl von 150 pro Minute versehen war.

• Beispiel 1

Synthese einer Kernpartikeldispersion (1. Stufe)

In einem Reaktor mit Ankerrührer, Thermometer, Gaseintrittsrohr, Beschickungsrohren und Rückflusskühler wurden zunächst 258,6 g Wasser vorgelegt, dann wurden 5,08 g Polystyrenkeimpartikeldispersion mit einer Teilchengröße von 30 nm und einem Feststoffgehalt von 33 Masse% zugegeben. Der Kolbeninhalt wurde anschließend erhitzt und bei einer Drehzahl von 150 min$^{-1}$ gerührt. Während dieser Zeit wurde dem Reaktor Stickstoff zugeführt. Bei Erreichen einer Temperatur von 85°C in dem Wärmebad und von 80 °C im Reaktor wurde die Stickstoffzufuhr eingestellt und vermieden, dass Luft in den Reaktor gelangte. Vor der Polymerisation wurden dem Reaktor 19,3 % einer Natriumpersulfatlösung aus 3,6 g Natriumpersulfat in 100 g Wasser zugeführt und 5 Minuten lang voroxidiert, dann wurde der Rest Natriumpersulfatlösung innerhalb von 4 Stunden zugesetzt. Während dieser 4 Stunden wurden 8,6 Masse-% Monomeremulsion (a), Texapon NSO (Konz.: 28 Masse-%), 5,22 g und 35,0 g n-Butylacrylat innerhalb von 40 Minuten zugesetzt. Anschließend wurde der Rest der Monomeremulsion (a) über eine Zeitdauer von 3 Stunden und 20 Minuten zugegeben. Es wurde davon ausgegangen, dass die Reaktion im MangelRegime abläuft, so dass die Bildung von Zweitkeimen vermieden wird. Nach Abschluss der Monomerzugabe ließ man die Dispersion eine Stunde nachpolymerisieren. Anschließend erfolgte die Abkühlung auf Zimmertemperatur.

a) Monomeremulsion

| | |
|---|---|
| 540,0 g | Styren |
| 13,33 g | Divinylbenzen |
| 1,67 g | Allylmethacrylat |
| 10,0 g | Acrylsäure |
| 16,39 g | Texapon, Massekonz.: 28 % |
| 22,11 g | Natronlauge, Massekonz.: 25 % |
| 501,3 g | Wasser |

Die Dispersion weist die folgenden Eigenschaften auf :

| | |
|---|---|
| Feststoffgehalt: | 40 Masse-% |
| Teilchengröße: | 206,3 nm |
| Koagulation: | < 1,5 g |
| pH-Wert: | 6,59 |
| Polydispersitätsindex: | 0,14 |

Der Erhalt von Kernpartikeln unterschiedlicher Größen ist durch Änderung der Keimpartikelkonzentrationen möglich. Tabelle 1 zeigt unterschiedliche Partikel.

Tabelle 1

| Beispiel Nr. | 1A | 1 B | 1C | 1 D | 1 E | 1 F |
|---|---|---|---|---|---|---|
| Keimkonz. % | 0,65 | 0,55 | 0,44 | 0,275 | 0,2 | 0,17 |
| Feststoffgehalt | 35,0 | 35,4 | 40,2 | 39,9 | 30,0 | 34,8 |
| Teilchengröße (nm) | 149,1 | 161,5 | 170,6 | 206,3 | 208,6 | 254,8 |
| P.I. | 0,13 | 0,16 | 0,17 | 0,14 | 0,26 | 0,14 |

• Beispiel 2

Synthese einer Kem-Schale-Partikeldispersion

In einem Reaktor mit Ankerrührer, Thermometer, Gaseintrittsrohr, Beschickungsrohren und Rückflusskühler wurden 325,8 g Dispersion nach Beispiel 1D vorgelegt. Dann wurde mit dem Erhitzen und dem Rühren bei einer Drehzahl von 150 min-1 begonnen. Während dieser Zeit wurde dem Reaktor Stickstoff zugeführt. Bei Erreichen einer Temperatur von 85 °C in dem Wärmebad und 80 °C im Reaktor wurde die Stickstoffzufuhr eingestellt und vermieden, dass Luft in den Reaktor gelangte. 9,8 % einer Natrium-persulfatlösung aus 0,8 g Natriumpersulfat in 50 g Wasser (Initiatorlösung) wurden vor der Polymerisation zugegeben. Nach 5 Minuten wurde der Rest der Natriumpersulfatlösung innerhalb von 3 Stunden zugesetzt. Während der gleichen 3 Stunden wurde innerhalb von 45 Minuten die Monomeremulsion (a) zugegeben, anschließend ließ man 15 Minuten nachpolymerisieren. Dann wurde die Monomeremulsion (b) innerhalb von 2 Stunden zugegeben und nach einer weiteren Stunde Nachpolymerisation auf Zimmertemperatur abgekühlt.

a) Monomeremulsion (2. Stufe)

| | |
|---|---|
| 11,7 g | Styrol |
| 9,1 g | n-Butylacrylat |

(fortgesetzt)

| | |
|---|---|
| 1,17 g | Allylmethacrylat |
| 1,46 g | Acrylsäure |
| 1,86 g | Texapon, Massekonz.: 28 % |
| 1,46 g | Natronlauge, Massekonz.: 25 % |
| 55,0 g | Wasser |

b) Monomeremulsion (3. Stufe)

| | |
|---|---|
| 71,5 g | n-Butylacrylat |
| 34,6 g | Methylmethacrylat |
| 1,3 g | Acrylsäure |
| 1,16 g | Texapon, Massekonz.: 28 % |
| 0,77 g | Natronlauge, Massekonz.: 25 % |
| 53,5 g | Wasser |

Die Dispersion weist die folgenden Eigenschaften auf:

| | |
|---|---|
| Masseverhältnis Kern: | Mantel: 1:1 |
| Feststoffgehalt: | 40 Masse-% |
| Teilchengröße: | 279,8 nm |
| Koagulation: | < 2 g |
| pH-Wert: | 5,66 |
| Polydispersitätsindex: | 0,15 |

Es können Kern-Schale-Partikel mit einem Verhältnis Kern : Mantel von 1:1 hergestellt werden. Die Tabelle 1 zeigt die Eigenschaften von Kern-Schale-Partikeln und den Filmen, die aus den Dispersionen hergestellt werden.

Tabelle 2

| Beispiel Nr. | 2A | 2B | 2C | 2D | 2E | 2F |
|---|---|---|---|---|---|---|
| Kern-Nummer | 1A | 1 B | 1 C | 1 D | 1 E | 1 F |
| Feststoffgehalt | 40,2 | 40,3 | 40,2 | 40,8 | 40,0 | 39,9 |
| Teilchengröße (nm) | 234,2 | 224,0 | 233,7 | 279,8 | 364,7 | 332,6 |
| P.I. | 0,19 | 0,17 | 0,16 | 0,15 | 0,26 | 0,13 |
| Filmfarbe (p) | schwarz-violett | violett | blau | grün | orange | rot |
| Filmfarbe (s) | schwarz | schwarz-violett | schwarz-blau | hellblau | blau-grün | grün |

• Beispiel 3

Synthese einer Kernpartikeldispersion

In einem Reaktor mit Ankerrührer, Thermometer, Gaseintrittsrohr, Beschickungsrohren und Rückflusskühler wurden zunächst 206,3 g Wasser vorgelegt, anschließend wurden 2,73 g Polystyrenkeimpartikeldispersion mit einer Teilchengröße von 30 nm und einem Feststoffgehalt von 33 Masse-% zugesetzt. Dann wurde mit dem Erhitzen und Rühren bei einer Drehzahl von 150 min-1 begonnen. Während dieser Zeit wurde dem Reaktor Stickstoff zugeführt. Bei Erreichen einer Temperatur von 85 °C in dem Wärmebad und von 80 °C im Reaktor wurde die Stickstoffzufuhr eingestellt und vermieden, dass Luft in den Reaktor gelangte. Vor der Polymerisation wurden dem Reaktor 2,4 Masse-% einer Natriumpersulfatlösung aus 2,7 g Natriumpersulfat in 187,0 g Wasser zugesetzt, nach 5 Minuten wurde der Rest der Natriumpersulfatlösung über eine Zeit von 4 Stunden zugegeben. Während dieser 4 Stunden wurden innerhalb von 40 Minuten 8,6 Masse-% der Monomeremulsion (a) und 30,0 g n-Butylacrylat zugesetzt; dann wurde der Rest der Monomeremulsion (a) über eine Zeit von 3 Stunden und 20 Minuten zugegeben. Es wurde davon ausgegangen, dass die Reaktion im Mangelregime abläuft, so dass die Zweitkeimbildung vermieden wird. Nach dem Abschluss der Monomerzugabe ließ man die Dispersion eine Stunde nachpolymerisieren und auf Zimmertemperatur abkühlen.

a) Monomeremulsion

| | | |
|---|---|---|
| 405,0 g | Styren |
| 11,25 g | Divinylbenzen |
| 3,75 g | Acrylsäure |
| 9,643 g | Texapon, Massekonz.: 28 % |
| 10,0 g | Natronlauge, Massekonz.: 25 % |
| 650,0 g | Wasser |

Die Dispersion weist folgende Eigenschaften auf:

| | |
|---|---|
| Feststoffgehalt: | 30 Masse-% |
| Teilchengröße: | 244,5 nm |
| Koagulation: | < 1,5 g |
| pH-Wert: | 7,2 |
| Polydispersitätsindex: | 0,14 |

Kernpartikel unterschiedlicher Größen kann man durch Veränderung der Keimpartikelkonzentrationen herstellen. Tabelle 1 zeigt unterschiedliche Partikel.

Tabelle 3

| Beispiel Nummer | 3A | 3B | 3C |
|---|---|---|---|
| Keimkonz., Ma.-% | 0,42 | 0,275 | 0,2 |
| Feststoffgehalt | 34,9 | 39,9 | 30,0 |
| Teilchengröße (nm) | 166,5 | 264,1 | 246,5 |
| P.I. | 0,20 | 0,20 | 0,14 |

• Beispiel 4

Synthese einer Kem-Schale-Partikeldispersion

In einem Reaktor mit Ankerrührer, Thermometer, Gaseintrittsrohr, Beschickungsrohren und Rückflusskühler wurden 376,3 g Dispersion nach Beispiel 3C vorgelegt, dann wurden 24 g Wasser zugegeben. Anschließend wurde mit dem Erwärmen und Rühren bei einer Drehzahl von 150 min$^{-1}$ begonnen. Während dieser Zeit wurde dem Reaktor Stickstoff zugeführt. Bei Erreichen einer Temperatur von 85 °C in dem Wärmebad und von 80 °C im Reaktor wurde die Stickstoffzufuhr eingestellt und vermieden, dass Luft in den Reaktor gelangte. Vor der Polymerisation wurden 5 % einer Natriumpersulfatlösung aus 2,25 g Natriumpersulfat in 153,8 g Wasser (Initiatorlösung) zugesetzt und 5 Minuten lang voroxidiert. Dann wurde der Rest der Natriumpersulfatlösung innerhalb von 2 Stunden zugegeben. Während dieser zwei Stunden wurde die Monomeremulsion (a) zugesetzt, nach einer einstündigen Nachpolymerisation erfolgte dann die Abkühlung auf Zimmertemperatur.

a) Monomeremulsion

| | |
|---|---|
| 221,3 g | n-Butylacrylat |

(fortgesetzt)

| 146,3 g | Methylmethacrylat |
| 7,5 g | Acrylsäure |
| 5,8 g | Texapon, Massekonz.: 28 % |
| 17,5 g | Natronlauge, Massekonz.: 25 % |
| 268,8 g | Wasser |

Die Dispersion weist die folgenden Eigenschaften auf:

| Masseverhältnis Kern: | Mantel: 1:3 |
| Feststoffgehalt: | 40 Masse-% |
| Teilchengröße: | 390,4 nm |
| Koagulation: | < 1,5 g |
| pH-Wert: | 7,14 |
| Polydispersitätsindex: | 0,11 |

• Beispiel 5

Synthese einer Kern-Schale-Dispersion

In einem Reaktor mit Ankerrührer, Thermometer, Gaseintrittsrohr, Beschickungsrohren und Rückflusskühler wurden 444,7 g Dispersion nach Beispiel 3A vorgelegt, anschließend wurde mit dem Erhitzen und Rühren bei 150 min$^{-1}$ begonnen. Während dieser Zeit wurde dem Reaktor Stickstoff zugeführt. Bei Erreichen einer Temperatur von 85 °C in dem Wärmebad und von 80 °C im Reaktor wurde die Stickstoffzufuhr eingestellt und vermieden, dass Luft in den Reaktor gelangte. Vor der Polymerisation wurden 2,8 % einer Natriumpersulfatlösung aus 1,38 g Natriumpersulfat in 95,8 g Wasser (Initiatorlösung) zugesetzt; nach 5 Minuten wurde der Rest der Natriumpersulfatlösung über eine Zeit von 3 Stunden zugesetzt. Während dieser drei Stunden wurde innerhalb von 45 Minuten die Monomeremulsion (a) zugesetzt, anschließend ließ man 15 Minuten lang nachpolymerisieren. Dann wurde innerhalb von 2 Stunden das Gemisch (b) zugesetzt und nach einer einstündigen Nachpolymerisation auf Zimmertemperatur abgekühlt.

a) Monomeremulsion

| 20,7 g | Styren |
| 16,1 g | n-Butylacrylat |
| 1,15 g | Acrylsäure |
| 3,36 g | Texapon, Massekonz.: 28 % |
| 2,6 g | Natronlauge, Massekonz.: 25 % |
| 91,1 g | Wasser |

b) Monomeremulsion4

| 189,8 g | n-Butylacrylat |
| 2,3 g | Acrylsäure |
| 2,1 g | Texapon, Massekonz.: 28 % |
| 4,6 g | Natronlauge, Massekonz.: 25 % |
| 74,5 g | Wasser |

Die Dispersion weist die folgenden Eigenschaften auf:

| Masseverhältnis Kern: | Mantel: 1:1,5 |
|---|---|
| Feststoffgehalt: | 39,8 Masse-% |
| Teilchengröße: | 233,5 nm |
| Koagulation: | < 1,5 g |
| pH-Wert: | 7,30 |
| Polydispersitätsindex: | 0,24 |

• Beispiel 6

Synthese einer Deckschichtdispersion

Ein Reaktor mit Ankerrührer, Thermometer, Gaseintrittsrohr, Beschickungsrohren und Rückflusskühler wurde auf 50 C erhitzt und anschließend mit einem Gemisch aus 13,2 g Methylmethacrylat, 13,0 g n-Butylacrylat, 99,8 g Lutensol TO89 - 20%ig -, 82,29 g Dowfax 2A1 - 45%ig - und 312 g Wasser beschickt. Der Rührer wurde mit einer Drehzahl von 200 min1 in Betrieb genommen, und es wurde eine Minute lang Stickstoff in den Reaktor eingeleitet; anschließend wurden dem Reaktor 9,42 g Hydroperoxid und 25 Masse-% der Initiatorlösung (b) zugesetzt. Die Polymerisationszeit betrug 10 Minuten. Dann wurden das Gemisch (a) und der Rest des Gemischs (b) im Laufe von 2 bzw. 3 Stunden zugegeben.

a) Monomeremulsion

| 160,5 g | n-Butylacrylat |
|---|---|
| 283,3 g | Methylmethacrylat |
| 12,7 g | Dowfax 2A1; 45%ig |
| 388,6 g | VE-Wasser |

b) Initiatorlösung

| 2,83 g | Ascorbinsäure |
|---|---|
| 0,09 g | Dissolvine E-Fe, 6,4%ig |
| 181,2 g | Wasser |

Nachdem die Zugabe der Monomeremulsion (a) abgeschlossen war, ließ man eine weitere Stunde nachpolymerisieren. Dann erfolgte die Abkühlung auf Zimmertemperatur.
Die Dispersion weist die folgenden Eigenschaften auf:

| Feststoffgehalt. | 38,2 Masse-%. |
|---|---|
| Teilchengröße: | 38,2 nm |
| pH-Wert: | 2,6 |

• Beispiel 7

Herstellung des Films

Mit Hilfe einer Rakel wurde ein Film aus dem Stoff nach Beispiel 2 auf einem glatten schwarzen Papier oder auf einer Glasplatte ausgegossen. Nach einer Trocknungszeit von 10 Minuten in der Umgebungsatmosphäre weist jeder Film mit einer Dicke von 30 μm eine schwache Färbung mit einem stark weißen Hintergrund auf.

• Beispiel 8

Herstellung des Films

Bei einer Wärmebehandlung des Beispiels 7 bei 140 °C über eine Zeit von 1-60 Minuten blieb die Farbe des Films die gleiche, aber mit einem weitaus stärkeren Glanz und fast keinem weißen Hintergrund mehr. Der Film weist eine winkelabhängige Farbe entsprechend den Angaben in Tabelle 2 auf. In Abhängigkeit von der Teilchengröße war die Farbe der Filme unterschiedlich. Bei einer Blickrichtung senkrecht auf die Filmoberfläche änderte sich die Filmfarbe in der Reihenfolge violett, blau, grün, orange und rot, wobei diese Farben den Teilchendurchmessern 226,5 nm, 240,9 nm, 281,3 nm, 294,7 nm bzw. 321,1 nm entsprachen. Bei einem schrägen Betrachtungswinkel (etwa 45°) änderte sich die vorgenannte Farbe zu blauviolett, blau, hellblau, blaugrün bzw. grün. Daraus geht offensichtlich hervor, dass die Filmfarbe über den gesamten sichtbaren Spektralbereich kontinuierlich verändert werden kann, indem man nur einfach die Kern-Mantel-Partikelgröße anpasst.

• Beispiel 9

Herstellung des Films

Wenn man auf den Film nach Beispiel 7 eine dem Beispiel entsprechende Deckschichtdispersion ausgießt und den Deckschichtfilm eine Stunde lang bei Zimmertemperatur oder nur 5-10 Minuten bei einer hohen Temperatur (100 °C) trocknet, erhält man einen glänzenden farbigen Film. Der Film weist eine winkelabhängige Farbe nach den Angaben in Tabelle 2 auf. Die Farbe der Filme änderte sich in Abhängigkeit von der Teilchengröße. Bei einer Blickrichtung senkrecht zur Filmoberfläche änderte sich die Farbe in der Reihefolge violett, blau, grün, orange und rot, wobei diese Farben den Teilchendurchmessern 226,5 nm, 240,9 nm, 281,3 nm, 294,7 nm bzw. 321,1 nm entsprachen. Bei einem schrägen Betrachtungswinkel (etwa 45°) änderte sich die vorgenannte Farbe zu blauviotett, blau, hellblau, blaugrün bzw. grün. Daraus geht offensichtlich hervor, dass die Filmfarbe über den gesamten sichtbaren Spektralbereich kontinuierlich verändert werden kann, indem man nur einfach die Kern-Mantel-Partikelgröße anpasst.

• Beispiel 10

Herstellung des Films

Wenn man auf den Film entsprechend Beispiel 8 eine Deckschichtdispersion nach Beispiel 6 ausgießt, den Deckschichtfilm eine Stunde lang bei Zimmertemperatur oder nur 5-10 Minuten bei einer hohen Temperatur (100 °C) trocknet, erhält man einen glänzenden farbigen Film. Die erzielte Farbintensität ist die gleiche wie beim Beispiel 9.

• Beispiel 11

Die Deckschichtdispersion des Beispiels 6 wird mit der Kern-Schale-Dispersion des Beispiels 2 in einem Masseverhältnis Deckschicht: Kern-Schale-Dispersion von 5:100 bis 12:100 vermischt, auf einem glatten schwarzen Papier wird ein Film ausgegossen und bei Umgebungstemperatur etwa 10 Minuten lang getrocknet; man erhält einen glänzenden farbigen Film. Die dabei erhaltene Farbintensität des Films ist die gleiche wie beim Beispiel 9.

• Beispiel 12

Herstellung des Films

Mit Hilfe einer Rakel wurde auf einem glatten schwarzen Papier oder auf einer Glasplatte ein Film der Dispersion nach Beispiel 4 ausgegossen. Nach einer Trocknungszeit von 10 Minuten in der Umgebungsatmosphäre weist jeder Film mit einer Dicke von 30 $\mu$m eine schwach rote Färbung mit einem stark weißen Hintergrund auf.

• Beispiel 13

Eine Wärmebehandlung des Beispiels 12 bei 140 °C über eine Zeit von 1-60 Minuten führte zu keiner Änderung der erhaltenen Farbintensität.

• Beispiel 14

Mit Hilfe einer Rakel wurde auf einem glatten schwarzen Papier oder auf einer Glasplatte ein Film aus der Dispersion nach Beispiel 5 ausgegossen. Nach einer Trocknungszeit von 10 Minuten in der Umgebungsatmosphäre weist jeder Film mit einer Dicke von 30 $\mu$m eine schwach violette Färbung mit einem stark weißen Hintergrund auf.

• Beispiel 15

Eine Wärmebehandlung des Beispiels 15 bei 140 °C über eine Zeit von 1-60 Minuten führte zu keiner Änderung der erhaltenen Farbintensität.

• Beispiel 16

Tetraethylenglycol (TEG) oder andere Weichmacher werden mit der Kern-Mantel-Dispersion des Beispiels 2 in einem Masseverhältnis Deckschicht: Kern-Mantel-Dispersion von 5:100 bis 10:100 vermischt, auf einem glatten schwarzen Papier wird ein Film ausgegossen und bei Umgebungstemperatur etwa 10 Minuten lang getrocknet; man erhält einen glänzenden farbigen Film und einem stark weißen Hintergrund.

• Beispiel 17

Tetraethylenglycol (TEG) oder andere Weichmacher werden mit der Kern-Mantel-Dispersion des Beispiels 2 in einem Masseverhältnis Deckschicht: Kern-Mantel-Dispersion von 5:100 bis 20 :100 vermischt, auf einem glatten schwarzen Papier wird ein Film ausgegossen und bei Umgebungstemperatur und Luftfeuchtigkeit drei Tage lang getrocknet; der so erhaltene Film mit einer Dicke von 100 $\mu$m weist einen schönen Glanz auf.

**Patentansprüche**

1. Verfahren zur Herstellung eines farbigen Polymersystems, welches aus einer Matrix und diskreten Polymerteilchen, welche gemäß einer definierten Raumgitterstruktur in der Matrix-verteilt sind, besteht und durch Verfilmung eines Emulsionspolymerisats mit Kern/Schale Aufbau erhalten wird, **dadurch gekennzeichnet, dass**,

- das Emulsionspolymerisat erhältlich ist durch
- Polymerisation von Monomeren in mindestens einer ersten Stufe (Monomere des Kerns),
- anschließende Polymerisation von Monomeren in mindestens einer weiteren, zweiten Stufe (Übergangsstufe) und
- abschließende Polymerisation von Monomeren in einer dritten Stufe (Monomere der Schale),

wobei, bezogen auf die prozentuale Zusammensetzung der Monomerengemische der drei Stufen, maximal 30 Gew.-% der Monomeren der ersten Stufe mit denen der dritten Stufe übereinstimmen und die Monomeren der zweiten Stufe jeweils zu mindestens 5 Gew.-% mit denen der ersten und denen der dritten Stufe übereinstimmen, wobei es sich bei maximal 60 Gew.-% der Monomeren der 2. Stufe um Monomere handelt, die weder in der 1. noch in der 3. Stufe vorhanden sind.

2. Verfahren gemäß Anspruch 1, **dadurch gekennzeichnet, dass** es sich bei den Polymerteilchen des farbigen Polymersystems um eine oder mehrere Teilchensorten mit einem mittleren Teilchendurchmesser im Bereich von 0,05 bis 5 $\mu$m handelt, wobei aber jede Teilchensorte einen Polydispersitätsindex (PI) kleiner 0,6 hat, berechnet nach der Formel

$$P.I. = (D_{90}-D_{10})/D_{50}$$

worin $D_{90}$, $D_{10}$ und $D_{50}$ Teilchendurchmesser bezeichnen, für die gilt:

$D_{90}$:    90 Gew.-% der Gesamtmasse aller Teilchen haben einen Teilchendurchmesser kleiner oder gleich $D_{90}$

(fortgesetzt)

$D_{50}$:   50 Gew.-% der Gesamtmasse aller Teilchen haben einen Teilchendurchmesser kleiner oder gleich $D_{50}$

$D_{10}$:   10 Gew.-% der Gesamtmasse aller Teilchen haben einen Teilchendurchmesser kleiner oder gleich $D_{10}$

3. Verfahren gemäß Anspruch 1 oder 2, **dadurch gekennzeichnet, dass** es sich bei den Polymerteilchen des farbigen Polymersystems um eine Teilchensorte handelt.

4. Verfahren gemäß einem der Ansprüche 1 bis 4, **dadurch gekennzeichnet, dass** das Emulsionspolymerisat insgesamt zu mindestens 40 Gew. % aus sogenannten Hauptmonomeren, ausgewählt aus $C_1$ bis $C_{20}$ Alkyl(meth) acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren aufgebaut ist.

5. Verfahren gemäß einem der Ansprüche 1 bis 4 **dadurch gekennzeichnet, dass** sich die Polymerteilchen des farbigen Polymersystems und die Matrix im Brechungsindex unterscheiden.

6. Verfahren gemäß einem der Ansprüche 1 bis 5 **dadurch gekennzeichnet, dass** der Unterschied im Brechungsindex mindestens 0,01, insbesondere mindestens 0,1 beträgt.

7. Verfahren gemäß einem der Ansprüche 1 bis 6, **dadurch gekennzeichnet, dass** der Polydispersitätsindex der diskreten Polymerteilchen kleiner 0,45 ist.

8. Verfahren gemäß einem der Ansprüche 1 bis 7, **dadurch gekennzeichnet, dass** der Kern des Emulsionspolymerisats vernetzt ist.

9. Verfahren gemäß einem der Ansprüche 1 bis 8, **dadurch gekennzeichnet, dass** bei dem Emulsionspolymerisat das Gewichtsverhältnis des Kerns zur Schale 1 :0,05 bis 1 : 20 beträgt.

10. Verfahren gemäß einem der Ansprüche 1 bis 9, **dadurch gekennzeichnet, dass** der Abstand zwischen den diskreten Polymerteilchen der farbigen Polymerschicht 20 bis 50 000 Nanometer beträgt.

11. Verfahren gemäß einem der Ansprüche 1 bis 10, **dadurch gekennzeichnet, dass** auf das farbige Polymersystem eine transparente Polymerschicht aufgebracht wird.

12. Verfahren gemäß einem der Ansprüche 1 bis 11, **dadurch gekennzeichnet, dass** das Polymer der transparenten Schicht insgesamt zu mindestens 40 Gew. % aus sogenannten Hauptmonomeren, ausgewählt aus $C_1$ bis $C_{20}$ Alkyl (meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren aufgebaut ist.

13. Verfahren gemäß einem der Ansprüche 1 bis 12, **dadurch gekennzeichnet, dass** es sich bei dem Polymer der transparenten Schicht um ein Emulsionspolymerisat handelt.

14. Verfahren gemäß Anspruch 13, **dadurch gekennzeichnet, dass** das Emulsionspolymerisat einen gewichtsmittleren Teilchendurchmesser von 10 bis 500 nm, vorzugsweise 30 bis 200 nm hat.

15. Verfahren gemäß einem der Ansprüche 1 bis 14, **dadurch gekennzeichnet, dass** das Polymer der transparenten Schicht in Form einer Lösung oder Dispersion auf die farbige Schicht aufgebracht wird und anschließend eine Trocknung erfolgt.

16. Verfahren gemäß einem der Ansprüche 1 bis 15, **dadurch gekennzeichnet, dass** die Dicke der transparenten Schicht 0,2 bis 500 $\mu$m beträgt

17. Verfahren gemäß einem der Ansprüche 1 bis 16, **dadurch gekennzeichnet dass** man das farbige Polymersystem und gegebenenfalls die transparente Polymerschicht auf Temperaturen oberhalb 60 °C erwärmt.

18. Farbiges Polymersystem, erhältlich nach einem Verfahren gemäß einem der Ansprüche 1 bis 17.

19. Verwendung eines farbigen Polymersystems gemäß einem der Ansprüche 1 bis 18 als oder in Beschichtungsmitteln, z. B. zur Beschichtung von Kunststoffen, Kunststofffolien, Papier, Verpackungen etc oder in optischen Anzeigen mit sich ändernder Farbe der Polymerschicht.

**Claims**

1. A process for preparing a colored polymer system, which is composed of a matrix and of discrete polymer particles distributed in accordance with a defined spatial lattice structure in the matrix, and which is obtained by filming of an emulsion polymer with core/shell structure, which comprises

   - using an emulsion polymer obtainable by
   - polymerizing monomers in at least one first stage (core monomers),
   - then polymerizing monomers in at least one further, second stage (transition stage), and
   - finally polymerizing monomers in a third stage (shell monomers),

   where, based on the percentage constitution of the monomer mixtures of the three stages, at most 30% by weight of the monomers of the first stage are identical with those of the third stage, and 5% of the monomers of the second stage are identical with, respectively, those of the first and those of the third stage, and not more than 60% by weight of the monomers of the 2nd stage here are monomers absent in the 1st stage and also absent in the 3rd stage.

2. The process according to claim 1, wherein the polymer particles of the colored polymer system comprise one or more types of particle with a median particle diameter in the range from 0.05 to 5 $\mu$m, where, however, each type of particle has a polydispersity index (PI) smaller than 0.6, calculated from the formula

$$PI = (D_{90}-D_{10})/D_{50}$$

   where $D_{90}$, $D_{10}$, and $D_{50}$ are particle diameters for which the following apply:

   $D_{90}$:   90% by weight of the total weight of all of the particles have a particle diameter smaller than or equal to $D_{90}$
   $D_{50}$:   50% by weight of the total weight of all of the particles have a particle diameter smaller than or equal to $D_{50}$
   $D_{10}$:   10% by weight of the total weight of all of the particles have a particle diameter smaller than or equal to $D_{10}$

3. The process according to claim 1 or 2, wherein the polymer particles of the colored polymer system comprise one type of particle.

4. The process according to any of claims 1 to 3, wherein the entirety of the emulsion polymer is composed of at least 40% by weight of what are known as main monomers, selected from $C_1$-$C_{20}$-alkyl (meth)acrylates, vinyl esters of carboxylic acids which comprise up to 20 carbon atoms, vinylaromatics having up to 20 carbon atoms, ethylenically unsaturated nitriles, vinyl halides, vinyl ethers of alcohols which comprise from 1 to 10 carbon atoms, aliphatic hydrocarbons having from 2 to 8 carbon atoms and one or two double bonds, or mixtures of these monomers.

5. The process according to any of claims 1 to 4, wherein the polymer particles of the colored polymer system and the matrix differ in refractive index.

6. The process according to any of claims 1 to 5, wherein the difference in refractive index is at least 0.01, in particular at least 0.1.

7. The process according to any of claims 1 to 6, wherein the polydispersity index of the discrete polymer particles is smaller than 0.45.

8. The process according to any of claims 1 to 7, wherein the core of the emulsion polymer has been crosslinked.

9. The process according to any of claims 1 to 8, wherein the core-to-shell weight ratio in the emulsion polymer is from 1:0.05 to 1:20.

10. The process according to any of claims 1 to 9, wherein the distance between the discrete polymer particles of the colored polymer layer is from 20 to 50 000 nanometers.

11. The process according to any of claims 1 to 10, wherein a transparent polymer layer is applied to the colored polymer system.

12. The process according to any of claims 1 to 11, wherein the entirety of the polymer of the transparent layer is composed of at least 40% by weight of what are known as main monomers, selected from $C_1$-$C_{20}$-alkyl (meth) acrylates, vinyl esters of carboxylic acids which comprise up to 20 carbon atoms, vinylaromatics having up to 20 carbon atoms, ethylenically unsaturated nitriles, vinyl halides, vinyl ethers of alcohols which comprise from 1 to 10 carbon atoms, aliphatic hydrocarbons having from 2 to 8 carbon atoms and one or two double bonds, or mixtures of these monomers.

13. The process according to any of claims 1 to 12, wherein the polymer of the transparent layer is an emulsion polymer.

14. The process according to claim 13, wherein the emulsion polymer has a ponderal median particle diameter of from 10 to 500 nm, preferably from 30 to 200 nm.

15. The process according to any of claims 1 to 14, wherein the polymer of the transparent layer is applied in the form of a solution or dispersion to the colored layer, and a drying process then takes place.

16. The process according to any of claims 1 to 15, wherein the thickness of the transparent layer is from 0.2 to 500 $\mu$m.

17. The process according to any of claims 1 to 16, which comprises heating the colored polymer system and, if appropriate, the transparent polymer layer to temperatures above 60°C.

18. A colored polymer system, obtainable by a process according to any of claims 1 to 17.

19. The use of a colored polymer system according to any of claims 1 to 18 as, or in, coating composition(s), e.g. for the coating of plastics, plastics films, paper, packaging, etc., or in visual displays where the color of the polymer layer changes.

**Revendications**

1. Procédé de préparation d'un système polymère coloré, constitué d'une matrice et de particules polymères discrètes distribuées dans la matrice selon une structure en réseau tridimensionnel définie, et obtenu par filmogenèse d'un polymère en émulsion avec une construction noyau/coque, **caractérisé en ce que** :

   - le polymère en émulsion peut être obtenu par
   - polymérisation de monomères dans au moins une première étape (monomères du noyau),
   - polymérisation consécutive de monomères dans au moins une autre, deuxième, étape (étape de transition) et
   - polymérisation finale de monomères dans une troisième étape (monomères de la coque),

   dans lequel, par rapport à la composition en pourcentage des mélanges de monomères des trois étapes, au maximum 30 % en poids des monomères de la première étape correspondent à ceux de la troisième étape et les monomères de la deuxième étape correspondent à chaque fois jusqu'à au moins 5 % en poids à ceux de la première et à ceux de la troisième étape, dans lequel, pour au maximum 60% en poids des monomères de la 2ème étape, il s'agit de monomères n'existant ni dans la 1ère étape, ni dans la 3ème étape.

2. Procédé selon la revendication 1, **caractérisé en ce que** les particules polymères du système polymère coloré, correspondent à un ou de plusieurs types de particules avec un diamètre de particule moyen dans la plage de 0,05 à 5 $\mu$m, chaque type de particule ayant toutefois un indice de polydispersité (PI) inférieur à 0,6, calculé selon la formule

$$P.I. = (D_{90} - D_{10})/D_{50}$$

où $D_{90}$, $D_{10}$ et $D_{50}$ désignent les diamètres de particule, selon les affirmations suivantes:

$D_{90}$: 90 % en poids de la masse totale de toutes les particules ont un diamètre de particule inférieur ou égal à $D_{90}$

$D_{50}$ : 50 % en poids de la masse totale de toutes les particules ont un diamètre de particule inférieur ou égal à $D_{50}$

$D_{10}$ : 10 % en poids de la masse totale de toutes les particules ont un diamètre de particule inférieur ou égal à $D_{10}$.

3. Procédé selon la revendication 1 ou 2, **caractérisé en ce que** les particules polymères du système polymère coloré, correspondent à un type de particule.

4. Procédé selon l'une quelconque des revendications 1 à 4, **caractérisé en ce que** le polymère en émulsion dans son ensemble est constitué à au moins 40 % en poids de ce que l'on appelle des monomères principaux, choisis parmi les (méth) acrylates d'alkyle en $C_1$ à $C_{20}$, les esters de vinyle d'acides carboxyliques contenant jusqu' à 20 atomes de carbone, les substances vinylaromatiques ayant jusqu'à 20 atomes de carbone, les nitriles éthyléniquement insaturés, les halogénures de vinyle, les éthers de vinyle d'alcools contenant de 1 à 10 atomes de carbone, les hydrocarbures aliphatiques ayant de 2 à 8 atomes de carbone et une ou deux liaisons doubles ou des mélanges de ces monomères.

5. Procédé selon l'une quelconque des revendications 1 à 4, **caractérisé en ce que** les particules polymères du système polymère coloré et la matrice se différencient par l'indice de réfraction.

6. Procédé selon l'une quelconque des revendications 1 à 5, **caractérisé en ce que** la différence dans l'indice de réfraction est d'au moins 0,01, en particulier d'au moins 0,1.

7. Procédé selon l'une quelconque des revendications 1 à 6, **caractérisé en ce que** l'indice de polydispersité des particules polymères discrètes est inférieur à 0,45.

8. Procédé selon l'une quelconque des revendications 1 à 7, **caractérisé en ce que** le noyau du polymère en émulsion est réticulé.

9. Procédé selon l'une quelconque des revendications 1 à 8, **caractérisé en ce que** le rapport en poids du noyau sur la coque dans le polymère en émulsion est 1:0,05 à 1:20.

10. Procédé selon l'une quelconque des revendications 1 à 9, **caractérisé en ce que** la distance entre les particules polymères discrètes de la couche polymère colorée est de 20 à 50 000 nanomètres.

11. Procédé selon l'une quelconque des revendications 1 à 10, **caractérisé en ce qu'**une couche polymère transparente est appliquée sur le système polymère coloré.

12. Procédé selon l'une quelconque des revendications 1 à 11, **caractérisé en ce que** le polymère de la couche transparente dans son ensemble est constitué à au moins 40 % en poids de ce que l'on appelle des monomères principaux, choisis parmi les (méth)acrylates d' alkyle en $C_3$ à $C_{20}$, les esters de vinyle d'acides carboxyliques contenant jusqu'à 20 atomes de carbone, les substances vinylaromatiques ayant jusqu'à 20 atomes de carbone, les nitriles éthyléniquement insaturés, les halogénures de vinyle, les éthers de vinyle d'alcools contenant de 1 à 10 atomes de carbone, les hydrocarbures aliphatiques ayant de 2 à 8 atomes de carbone et une ou deux liaisons doubles ou des mélanges de ces monomères.

13. Procédé selon l'une quelconque des revendications 1 à 12, **caractérisé en ce que** le polymère de la couche transparente est un polymère en émulsion.

14. Procédé selon la revendication 13, **caractérisé en ce que** le polymère en émulsion a un diamètre de particule moyen pondéré de 10 à 500 nm, de manière préférée de 30 à 200 nm.

**15.** Procédé selon l'une quelconque des revendications 1 à 14, **caractérisé en ce que** le polymère de la couche transparente est appliqué sur la couche colorée sous la forme d'une solution ou d'une dispersion, et qu'un séchage s'ensuit.

**16.** Procédé selon l'une quelconque des revendications 1 à 15, **caractérisé en ce que** l'épaisseur de la couche transparente est de 0,2 à 500 $\mu$m.

**17.** Procédé selon l'une quelconque des revendications 1 à 16, **caractérisé en ce que** le système polymère coloré et éventuellement la couche polymère transparente sont chauffés à des températures supérieures à 60°C.

**18.** Système polymère coloré pouvant être obtenu par un procédé selon l'une quelconque des revendications 1 à 17.

**19.** Utilisation d'un système polymère coloré selon l'une quelconque des revendications 1 à 18 en tant que produits d'enduction ou dans des produits d'enduction, par exemple pour l'enduction de matières plastiques, de feuilles de plastique, de papier, d'emballages, etc., ou dans des affichages optiques avec une couleur changeante de la couche polymère.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19717879
- DE 19820302
- DE 19834194
- DE 10229732

- DE 19717879 A
- DE 19820302 A
- DE 19834194 A

**In der Beschreibung aufgeführte Nicht-Patentliteratur**

- **W. MÄCHTLE.** *Makromolekulare Chemie,* 1984, vol. 185, 1025-1039

- Methoden der organischen Chemie. *Makromolekulare Stoffe,* 1961, vol. XIV (1), 411-420